# FASCICULE DE BREVET EUROPEEN

(11) **EP 4 274 766 B1**
(45) Date de publication et mention de la délivrance du brevet: **05.06.2024**
(21) Numéro de dépôt: 22700111.2
(22) Date de dépôt: 05.01.2022
(51) Int. Cl.: B60R 21/36

(54) **MODULE DE PROTECTION POUR VEHICULE AUTOMOBILE DESTINE A PROTEGER UN PIETON LORS D'UN CHOC**
SCHUTZMODUL FÜR KRAFTFAHRZEUGE ZUM SCHUTZ EINES FUSSGÄNGERS BEI EINEM AUFPRALL
PROTECTION MODULE FOR A MOTOR VEHICLE TO PROTECT A PEDESTRIAN IN CASE OF IMPACT

(30) Priorité: 08.01.2021 FR 2100169; 28.12.2021 FR 2114565
(43) Date de publication de la demande: 15.11.2023
(73) Titulaire: ENVIRPROD, 91940 Les Ulis (FR)
(72) Inventeur: MORENO REYNA, Abraham, 75014 PARIS (FR); SANJEU, Catherine, 91460 MARCOUSSIS (FR)
(74) Mandataire: Berton, Anthony Christian Jacques
(86) Numéro de dépôt international: PCT/EP2022/050150
(87) Numéro de publication internationale: WO 2022/148778

(56) Documents cités:
- EP-A1- 3 321 139
- WO-A2-2008/151459
- DE-B3-102020 106 288
- JP-A- 2000 108 824
- JP-A- 2007 216 933
- JP-A- 2016 078 761

## Description

L'invention concerne un module de protection prévu pour équiper un véhicule, notamment automobile. Le module de protection est destiné à protéger un piéton lors d'un choc de ce dernier contre la face avant du véhicule automobile.

Il est connu de l'état de la technique le document DE 101 21 630 A1 qui divulgue un dispositif permettant de retenir un piéton lors d'un choc contre la face avant d'un véhicule automobile et ainsi éviter un second choc. En référence aux figures 7, 8, 9a, 9b de ce document, il est prévu une paire de bras 38 formant une paroi de fond 37 et une autre paire de bras 39 formant une paroi supérieure 38. Les paires de bras 38, 39 sont liées au pare-chocs avant du véhicule automobile par une liaison pivot. Le dispositif comprend en outre un filet 40 agencé entre la paire de bras 38 permettant de retenir le piéton. Ce document divulgue également un autre exemple de réalisation du dispositif dans lequel il est prévu deux bras gonflables 105, 106 et un filet de retenue 107 disposé entre les deux bras gonflables. Selon un autre mode de réalisation, illustré par les figures 18 à 21, le dispositif comprend des fourches d'airbag 114 supportant un airbag de cadre 115 et une paroi de verrouillage 121 permettant de retenir le piéton lors du choc.

On connaît également de l'art antérieur le document DE 102 13 178 A1 qui divulgue un dispositif de retenue d'un piéton lors d'un choc contre l'avant d'un véhicule automobile de manière à éviter un second impact. Il comprend des airbags de guidage 8, des airbags de pare-chocs 12 et des airbags de côté 14. Il est également prévu une paroi de retenue 5 pouvant être un filet, combiné à un airbag, ou un airbag, se déployant depuis le sol. La paroi de retenue 5 déployée est maintenue par des cordes 7 tendues lors du déploiement des airbags de guidage 8. La paroi de retenue 5 peut être un matelas gonflable.

Il est connu par ailleurs le document EP 3 409 542 A1 qui divulgue un dispositif 100 pour réduire les blessures d'un usager de la route 1 en cas de collision avec un véhicule à moteur 400, tel qu'un camion. Le dispositif 100 empêche l'usager de la route 1 de rebondir en cas de choc contre la partie avant du véhicule à moteur. Le dispositif 100 comprend un coussin gonflable 106 présentant au moins une section d'impact 112 et une section de retenue 114 destinée à transmettre à l'usager de la route 1 des forces opposées à la direction de déplacement. Le dispositif 100 comprend en outre une commande, liée à l'interface du conducteur, configurée, en réponse à la détection de l'usager de la route 1, pour remplir ladite section d'impact 112 jusqu'à un premier instant en réaction à la saisie de l'usager de la route 1, et pour remplir ladite une section de retenue 114 jusqu'à un deuxième instant ultérieur. La section d'impact 112 et la section de retenue 114 peuvent chacune comprendre deux parties. La section de retenue 114, et éventuellement une ou chaque zone partielle de la section de retenue 114, peut être en connexion fluidique avec la section d'impact 112 via une pluralité d'ouvertures de passage.

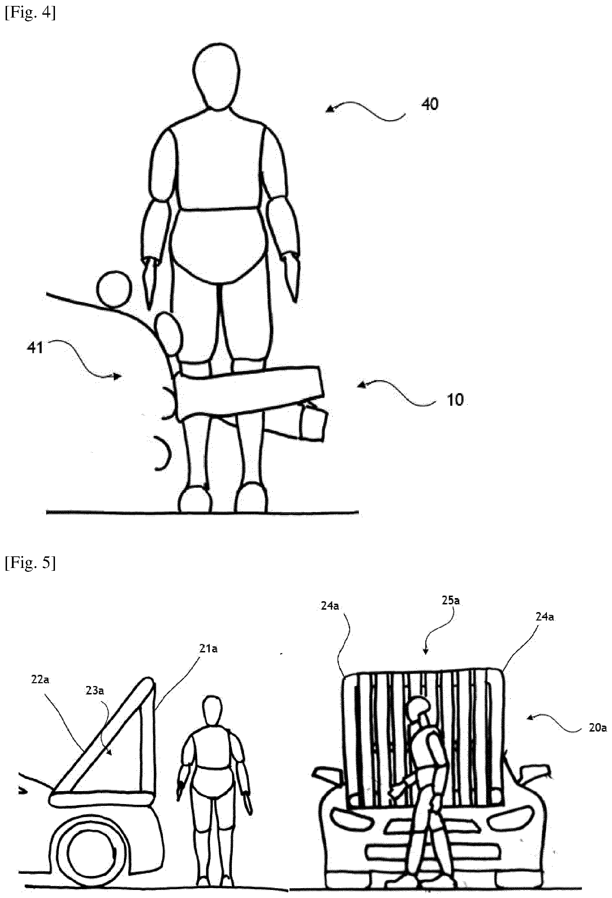

Il est en outre connu le document US 10,029,638 qui divulgue un système d'airbags comprenant des bras 221, 223 pour réduire un second impact du fait du rebond d'un premier impact. En référence à la [Fig.4], le système d'airbag entoure le piéton. Les bras 221, 223 peuvent être fermés par des supports 340. Il est prévu des moyens d'attache des extrémités des bras 221, 223 tels que de la colle, un crochet ou du Velcro^{®}.

On connaît par ailleurs le document CN 101973238 A qui divulgue un airbag de pare-chocs pour véhicule automobile destiné à protéger un piéton lors d'un choc contre la partie avant du véhicule automobile. L'airbag comprend deux bras 2 agencés pour entourer le piéton. Le document WO 2008/151459 A2 divulgue un module de protection pour véhicule selon le préambule de la revendication 1.

Ces divers dispositifs de protection d'un piéton en cas de choc contre la partie avant d'un véhicule automobile présentent l'inconvénient de ne protéger que partiellement le piéton. En effet, lors d'un premier choc avec le véhicule automobile, le piéton peut encore subir une projection ou un rebond pouvant entraîner un second choc et ainsi lui causer potentiellement des blessures, notamment sur le haut du corps, et plus particulièrement sur la tête. Ainsi, les dispositifs de l'art antérieur ne traitent que partiellement la protection du piéton lors d'un second choc.

Le but de l'invention est donc de pallier les inconvénients de l'art antérieur en proposant un module de protection pour véhicule automobile destiné à protéger un piéton en cas de choc contre la partie avant dudit véhicule automobile configuré de manière à améliorer la protection du piéton percuté dans le but de minimiser les blessures causées par l'impact.

Pour ce faire, l'invention se rapporte ainsi, dans son acceptation la plus large, à un module de protection pour véhicule destiné à protéger lors d'un choc entre la face avant dudit véhicule et ledit piéton, ledit véhicule comportant un pare-chocs, ledit module de protection comprenant une structure gonflable qui, en position de repos, est intégrée dans la face avant dudit véhicule ou dans la partie arrière du capot dudit véhicule à l'angle du pare-brise et qui, en position de protection, est déployée vers l'extérieur depuis la face avant ou depuis la partie arrière du capot à l'angle du pare-brise, ledit module de protection comportant en outre un dispositif générateur de gaz destiné à gonfler ladite structure gonflable caractérisé en ce que ladite structure gonflable comprend une première section d'impact disposée sur le pare-chocs dudit véhicule et une deuxième section d'impact disposée sur le capot dudit véhicule, chaque section d'impact comprenant un moyen de retenue entourant, dans la position de protection, au moins la moitié de la circonférence du corps du piéton.

Grâce à la présente invention, tout le corps du piéton est protégé en cas de chocs avec la partie avant d'un véhicule. L'invention permet ainsi de réduire, voire de supprimer les blessures causées au piéton.

Avantageusement, la deuxième section d'impact comprend un matelas.

Un matelas a pour effet de réduire davantage l'impact entre le haut du corps du piéton et le véhicule, et plus particulièrement entre la tête et le capot du véhicule. Les blessures causées sur le haut du corps du piéton sont ainsi diminuées, voire supprimées.

De préférence, la deuxième section d'impact comprend une armature en forme de prisme droit présentant une face avant verticale et une face arrière sensiblement inclinée comprenant une ouverture et deux faces latérales comprenant chacune une ouverture, ladite armature étant destinée à se déployer vers l'avant sur le capot.

Une telle armature permet de créer un amortissement pour le haut du corps du piéton lors d'un choc de ce dernier avec l'avant d'un véhicule.

De préférence, ladite armature comprend un ensemble de bras verticaux formant ledit moyen de retenue.

L'ensemble de bras verticaux permet de retenir le piéton afin d'éviter qu'il soit projeté lors d'un deuxième choc.

De préférence, ledit moyen de retenue comprend deux bras pouvant se rejoindre de manière à former un arc de cercle.

Ainsi, le piéton est maintenu pour éviter une projection suite au choc contre le véhicule.

De préférence, ledit moyen de retenue comprend un tube horizontal parabolique ou semi-circulaire.

De préférence, ledit moyen de retenue comporte des extensions destinées à être maintenues ensemble lors d'un choc entre le piéton et le véhicule automobile au moyen d'un dispositif de maintien.

De préférence, ledit dispositif de maintien est un adhésif, une colle ou un dispositif de couplage rapide comportant deux bandes de textile recouvertes chacune d'une texture différente.

Un tel dispositif de maintien a pour avantage de renforcer le maintien du piéton après le choc.

De préférence, ledit moyen de retenue comporte une bande.

La bande permet d'amortir le piéton et également de plier rapidement les bras du moyen de retenue. La projection du piéton suite au choc contre le véhicule est réduite, voire supprimée.

L'invention concerne également un véhicule automobile comprenant un module de protection selon la présente invention.

On décrira ci-après, à titre d'exemples non limitatifs, plusieurs formes d'exécution de la présente invention, en référence aux figures annexées sur lesquelles :
[Fig.1] illustre schématiquement une vue isométrique de la partie basse d'un module de protection pour véhicule automobile selon un mode de réalisation préféré de la présente invention, dans la position de protection ;
[Fig.2] illustre schématiquement une vue isométrique de la partie basse du module de protection montré sur la [Fig.1] dans la position de protection et de retenue ;
[Fig.3] représente schématiquement le module de protection illustré sur la [Fig.2] entourant les jambes d'un piéton lors d'un choc contre la partie avant du véhicule automobile ;
[Fig.4] représente schématiquement une vue de côté du module de protection entourant les jambes d'un piéton montré sur la [Fig.3] ;
[Fig.5] illustre schématiquement la partie haute du module de protection pour véhicule automobile selon un premier mode de réalisation de la présente invention ;
[Fig.6] illustre schématiquement la partie haute du module de protection pour véhicule automobile selon un deuxième mode de réalisation de la présente invention.

La présente invention concerne, selon son acceptation la plus générale, un module de protection pour véhicule automobile destiné à protéger un piéton lors d'un choc contre la face avant dudit véhicule automobile. Le module de protection comprend une structure gonflable. La structure gonflable est un airbag piéton en deux parties gonflables distinctes : une partie basse 10, également dénommée première section d'impact ou encore section de pare-chocs, destinée à recevoir les jambes du piéton et une partie haute 20a, 20b également dénommée deuxième section d'impact ou encore section de capot, destinée à recevoir le haut du corps du piéton, et plus particulièrement la tête.

La structure gonflable est, dans la position de repos, intégrée dans la face avant du véhicule ou dans la partie arrière du capot à l'angle du pare-brise. Dans la position de protection, à savoir la position du module de protection permettant de protéger le piéton lors d'un choc contre la partie avant du véhicule automobile, la structure gonflable est déployée vers l'extérieur depuis la face avant du véhicule ou depuis la partie arrière du capot à l'angle du pare-brise.

Chaque partie de la structure gonflable comprend un moyen de retenue du piéton agencé de manière à limiter la projection ou le rebond du piéton du fait du premier choc contre la face avant d'un véhicule. Chaque moyen de retenue est en communication fluidique avec sa partie.

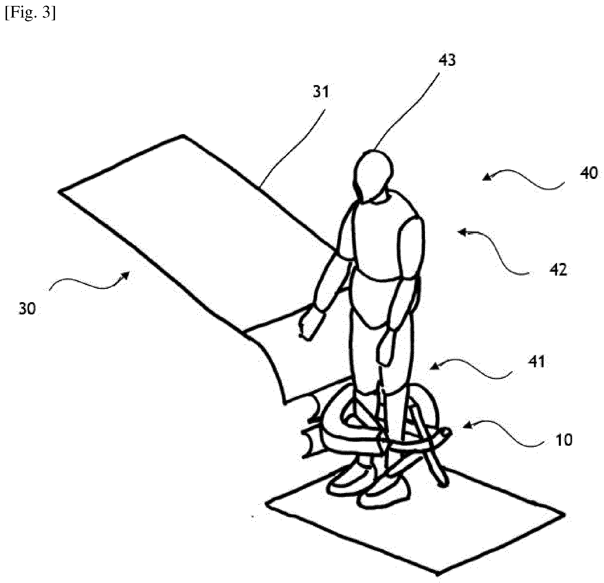

La partie basse 10 du module de protection, également dénommé dispositif d'airbag pour piétons, protège le piéton lors d'un premier choc entre le piéton et le véhicule et remplit la fonction de retenue de la partie inférieure du piéton. Si un véhicule ne peut pas éviter l'impact avec un piéton, le système de détection de collision de véhicule active le module de protection en un temps suffisamment court pour déployer la partie basse 10 et protéger le piéton. Lors d'une collision entre un véhicule 30 et un piéton 40, un premier impact est produit sur la partie inférieure du piéton 41, tel qu'illustré sur la [Fig.3]. Après ce premier impact, la partie inférieure du piéton 41 commence à être éjectée dans la même direction que le véhicule en raison de l'énergie d'impact entre le véhicule 30 et le piéton 40, le reste du corps du piéton 40 suivant cette trajectoire. Le piéton 40 peut avoir un mouvement de rotation par rapport à son centre de gravité en même temps que le véhicule 30 poursuit sa trajectoire d'impact, ce qui peut entraîner un choc de la partie supérieure du piéton 42 contre le véhicule 30, principalement dans la zone de la tête 43. Comme le piéton 40 est éjecté dans la même direction que le véhicule 30, il est susceptible de subir un deuxième impact, ou second choc, par exemple contre le sol ou un autre objet, après avoir été éjecté par le premier impact. La partie basse 10 du module de protection protège le piéton 40 contre le premier choc contre le véhicule 30. Son système de retenue partie basse 10 minimise l'énergie d'éjection et freine le mouvement de rotation du piéton 40. La partie basse 10 du module de protection peut être montée en conjonction avec la partie supérieure 20 du module de protection. Dans cette situation, la partie basse 10 et la partie haute 20 du module de protection pourraient être activées indépendamment et à des moments différents.

La partie basse 10 du module de protection modifie la dynamique de l'impact du piéton 40 après le premier choc entre le piéton 40 et le véhicule 30.

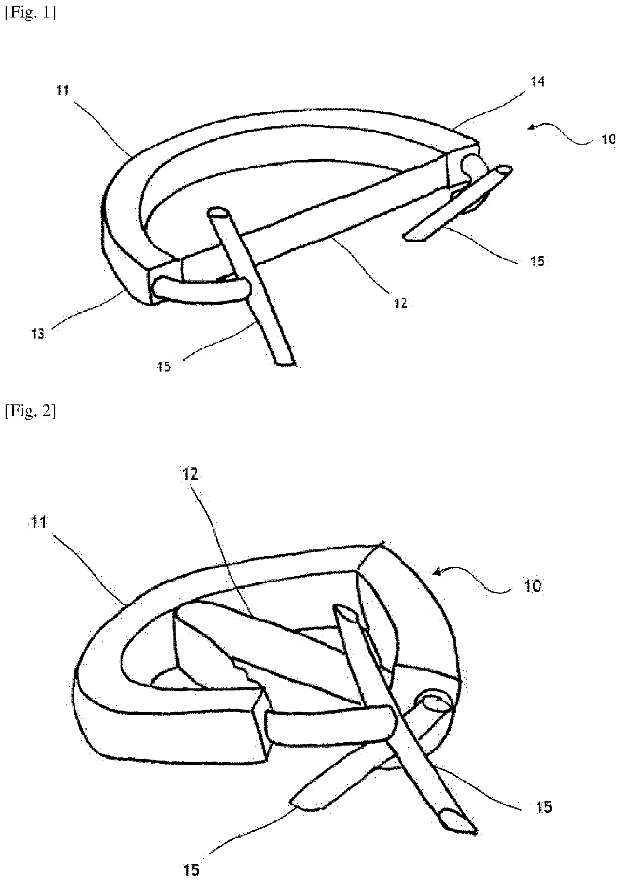

La [Fig.1] illustre une vue isométrique de la partie basse 10 du module de protection selon un mode de réalisation préféré de la présente invention. La partie basse 10 du module de protection consiste principalement en un tube horizontal 11 parabolique, ou alternativement semi-circulaire, qui protège la partie inférieure 41 du piéton 40 lors du premier impact avec le véhicule. La partie basse 10 du module de protection peut comporter des tubes horizontaux droits (non représentés) pour augmenter la zone de protection et ces tubes horizontaux droits sont en communication fluidique avec le tube horizontal 11, semi-circulaire ou parabolique, de la partie basse 10 du module de protection. Le déploiement des tubes horizontaux droits et du tube horizontal 11, parabolique ou semi-circulaire, peut se faire en même temps ou en différé et avant la première collision avec le piéton 40. La partie inférieure 10 du module de protection dans son tube horizontal 11, parabolique ou semi-circulaire, est fixée à la structure du véhicule 30 à l'arrière et se déploiera avant l'impact avec le piéton 40. Les tubes horizontaux droits peuvent avoir un système de fixation différent de celui du tube horizontal 11. Le véhicule 30 comprend un système de détection de collision imminente avec le piéton 40 qui active le module de protection pour piétons suffisamment longtemps avant le premier impact pour qu'il se déploie et fonctionne correctement.

Le tube horizontal 11, ou les tubes horizontaux, peut (peuvent) être configuré(s) pour absorber les forces de l'impact initial. La section des tubes horizontaux peut couvrir la partie avant du véhicule 30 qui est susceptible de subir un choc. La partie basse 10 du module de protection peut être rangée à l'avant du véhicule 30 dans sa zone de fixation.

La partie basse 10 du module de protection comprend en outre une bande 12 reliant un premier bras extérieur 13 et un second bras extérieur 14. La bande 12, également dénommée bande d'union ou élément d'union, peut être du même matériau que le reste de la partie basse 10 du module de protection. Dans une alternative, la bande 12 comprend des câbles, une matrice de câbles ou un autre matériau permettant d'obtenir la fonctionnalité de la bande 12. La bande 12 reçoit le premier contact avec le piéton 40. La force d'impact entre la bande 12 et le piéton 40 déforme le tube horizontal 11 à travers la bande d'union. La fonction de la bande 12 est de plier les bras extérieurs 13, 14 du tube horizontal 11 vers l'intérieur, comme cela est montré sur les figures 2 et 3. Il est illustré sur la [Fig.2] l'effet de déformation au moment d'impact entre le piéton 40 et la bande 12. Les bras extérieurs 13, 14 comportent des extensions 15 par rapport au tube horizontal 11 après la bande 12. Ces extensions 15 ont pour fonction de se trouver derrière la zone d'impact entre le piéton 40 et le tube horizontal 11 entourant la partie inférieure 41 du piéton 40 et générant une union d'auto-blocage. Les extensions 15, au moment du contact, sont maintenues ensemble à l'aide d'un adhésif, d'une colle ou de dispositifs de couplage rapide tels qu'un système composé de deux bandes de textile recouvertes chacune d'une texture différente permettant, lorsque l'on les met en contact, d'obtenir une liaison amovible, un tel système est connu sous la marque Velcro^{®}. De cette façon, le tube horizontal 11, avec les extensions 15, sont disposés autour de la partie inférieure 41 du piéton 40 après le premier impact. Après, l'union de l'auto-blocage des extensions 15 du tube horizontal 11 est maintenue tout au long de la collision entre le piéton 40 et le véhicule 30 jusqu'à son arrêt. Le(s) tube(s) horizontal(aux) pourraient être configuré(s) pour absorber l'énergie de collision. Toutefois, cela n'empêche pas le premier choc d'éjecter la partie inférieure 41 du piéton 40 en direction du véhicule 30. Les extensions 15 de tube horizontal 11 autobloquantes peuvent réduire, voire empêcher, la rotation du piéton 40 par rapport à son centre de gravité, générée lors du premier impact sur la face interne, en se refermant autour de la face inférieure du piéton 40. Cette liaison autour de la partie inférieure 41 du piéton 40 peut diminuer les accélérations générées après le premier impact et par conséquent peut minimiser les vitesses d'éjection.

En référence maintenant à la [Fig.5], il est illustré une vue de côté et une vue de face d'un premier mode de réalisation de la partie haute 20a du module de protection selon l'invention. La partie haute 20a du module de protection présente une armature en forme de prisme droit présentant une face avant verticale 21a et une face arrière sensiblement inclinée 22a comprenant une ouverture et deux faces latérales 23a comprenant une ouverture, se déployant vers l'avant sur le capot. Le moyen d'absorption de la partie haute 20a comprend un ensemble de tubes reliées entre eux, formant le cadre du prisme et un ensemble de tubes verticaux 24a disposés au niveau de la face avant. La partie haute 20a est alimentée par un générateur de gaz (non représenté) fixé sur la structure du véhicule 30 et relié aux tubes par un tuyau d'alimentation. La partie haute 20a comprend en outre un ensemble de bras verticaux 25a formant un moyen de retenue du piéton 40 destiné à le retenir, ou à limiter l'effet de projection, ou de rebond, du fait du choc contre la face avant du véhicule 40.

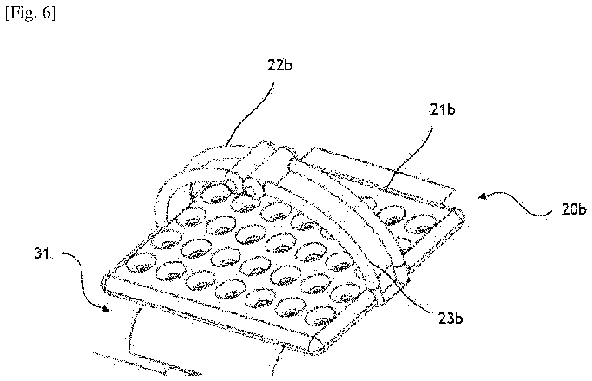

En référence à la [Fig.6], il est illustré une vue isométrique d'un deuxième mode de réalisation de la partie haute 20b du module de protection selon l'invention. La partie haute 20b comprend un matelas 21b s'étendant le long du capot 31 et deux bras 22b, 23b s'étendant depuis le matelas 21b de manière à former un demi-cercle lorsque les deux bras 22b, 23b sont reliés et maintenus ensemble. Le matelas 21b absorbe l'énergie cinétique du piéton 40 sur le capot 31. Le déploiement des deux bras 22b, 23b se fait après l'impact du piéton 40 sur le matelas 21b, de façon à pouvoir retenir le piéton 40 et à empêcher sa chute sur un élément de l'environnement extérieur.

## Revendications

1. Module de protection pour véhicule (30) destiné à protéger un piéton (40) lors d'un choc entre la face avant dudit véhicule (30) et ledit piéton (40), ledit véhicule (30) comportant un pare-chocs, ledit module de protection comprenant une structure gonflable qui, en position de repos, destinée à être intégrée dans la face avant dudit véhicule (30) ou dans la partie arrière du capot (31) dudit véhicule (30) à l'angle du pare-brise et qui, en position de protection, destinée à être déployée vers l'extérieur depuis la face avant ou depuis la partie arrière du capot (31) à l'angle du pare-brise, ledit module de protection comportant en outre un dispositif générateur de gaz destiné à gonfler ladite structure gonflable **caractérisé en ce que** ladite structure gonflable comprend une première section d'impact (10) destinée à être disposée sur le pare-chocs dudit véhicule (30) et une deuxième section d'impact (20a, 20b) destinée à être disposée sur le capot (31) dudit véhicule (30), **caractérisé en ce que** chaque section d'impact (10, 20a, 20b) comprenant un moyen de retenue (11, 21a, 22b, 23b, 25a) destiné à entourer dans la position de protection, au moins la moitié de la circonférence du corps du piéton (40).

2. Module selon la revendication 1 **caractérisé en ce que** la deuxième section d'impact (20b) comprend un matelas (21b).

3. Module selon la revendication 1 **caractérisé en ce que** la deuxième section d'impact (20a) comprend une armature en forme de prisme droit présentant une face avant verticale (21a) et une face arrière (22a) sensiblement inclinée comprenant une ouverture et deux faces latérales (23a) comprenant chacune une ouverture, ladite armature étant destinée à se déployer vers l'avant sur le capot (31).

4. Module selon la revendication 3 **caractérisé en ce que** ladite armature comprend un ensemble de bras verticaux (25a) formant ledit moyen de retenue.

5. Module selon l'une quelconque des revendications 1 à 2 **caractérisé en ce que** ledit moyen de retenue comprend deux bras (13, 14, 22b, 23b) pouvant se rejoindre de manière à former un arc de cercle.

6. Module selon l'une quelconque des revendications 1 à 2 **caractérisé en ce que** ledit moyen de retenue comprend un tube horizontal (11) parabolique ou semi-circulaire.

7. Module selon l'une quelconque des revendications 5 à 6 **caractérisé en ce que** ledit moyen de retenue comporte des extensions (15) destinées à être maintenues ensemble lors d'un choc entre le piéton (40) et le véhicule automobile (30) au moyen d'un dispositif de maintien.

8. Module selon la revendication 7 **caractérisé en ce que** ledit dispositif de maintien est un adhésif, une colle ou un dispositif de couplage rapide comportant deux bandes de textile recouvertes chacune d'une texture différente.

9. Module selon l'une quelconque des revendications 5 à 8 **caractérisé en ce que** ledit moyen de retenue comporte une bande (12).

10. Véhicule automobile comprenant un module de protection selon l'une quelconque des revendications 1 à 9.

## Patentansprüche

1. Schutzmodul für ein Fahrzeug (30) das dazu bestimmt ist, eines Fußgängers (40) bei einem Aufprall zwischen der Vorderseite des Fahrzeugs (30) und dem Fußgänger (40) zu schützen, wobei das Fahrzeug (30) einen Stoßfänger umfasst, wobei das Schutzmodul Folgendes umfasst aufblasbare Struktur, die in der Ruheposition, dazu bestimmt ist, in die Vorderseite des Fahrzeugs (30) oder in den hinteren Teil der Motorhaube (31) des Fahrzeugs (30) an der Ecke der Windschutzscheibe integriert ist und die im Schutz Position dazu bestimmt ist, von der Vorderseite oder vom hinteren Teil der Motorhaube (31) an der Ecke der Windschutzscheibe nach außen entfaltet wird, wobei das Schutzmodul außerdem eine Gaserzeugungsvorrichtung umfasst, die dazu bestimmt ist, die aufblasbare Struktur aufzublasen, **dadurch gekennzeichnet, dass** die aufblasbare Struktur Folgendes umfasst ein erster Aufprallabschnitt (10), der dazu bestimmt ist, an der Stoßstange des Fahrzeugs (30) angeordnet ist, und ein zweiter Aufprallabschnitt (20a, 20b) zur Anordnung auf der Motorhaube (31) des Fahrzeugs (30) umfasst, **dadurch gekennzeichnet**, wobei jeder Aufprallabschnitt (10, 20a, 20b) umfassend Haltemittel (11, 21a, 22b, 23b, 25a), das dazu bestimmt ist, in der Schutzposition mindestens die Hälfte des Umfangs des Körpers des Fußgängers (40) umgeben.

2. Modul nach Anspruch 1, **dadurch gekennzeichnet, dass** der zweite Aufprallabschnitt (20b) eine Matratze (21b) umfasst.

3. Modul nach Anspruch 1, **dadurch gekennzeichnet, dass** der zweite Aufprallabschnitt (20a) einen Anker in Form eines geraden Prismas mit einer vertikalen Vorderfläche (21a) und einer im Wesentlichen geneigten Rückfläche (22a) umfasst, die eine Öffnung und zwei Seitenflächen umfasst (23a) jeweils mit einer Öffnung, wobei der Rahmen dazu bestimmt ist, nach vorne auf die Abdeckung (31) aufgeklappt zu werden.

4. Modul nach Anspruch 3, **dadurch gekennzeichnet, dass** der Rahmen einen Satz vertikaler Arme (25a) umfasst, die die Haltemittel bilden.

5. Modul nach einem der Ansprüche 1 bis 2, **dadurch gekennzeichnet, dass** die Haltemittel zwei Arme (13, 14, 22b, 23b) umfassen, die so zusammengefügt werden können, dass sie einen Kreisbogen bilden.

6. Modul nach einem der Ansprüche 1 bis 2, **dadurch gekennzeichnet, dass** die Haltemittel ein parabolisches oder halbkreisförmiges horizontales Rohr (11) umfassen.

7. Modul nach einem der Ansprüche 5 bis 6, **dadurch gekennzeichnet, dass** die Haltemittel Verlängerungen (15) umfassen, die dazu bestimmt sind, bei einem Aufprall zwischen dem Fußgänger (40) und dem Kraftfahrzeug (30) mittels einer Haltevorrichtung zusammengehalten zu werden.

8. Modul nach Anspruch 7, **dadurch gekennzeichnet, dass** die Haltevorrichtung ein Klebstoff, ein Kleber oder eine Schnellkupplungsvorrichtung ist, die zwei Textilstreifen umfasst, die jeweils mit einer unterschiedlichen Textur bedeckt sind.

9. Modul nach einem der Ansprüche 5 bis 8, **dadurch gekennzeichnet, dass** das Haltemittel einen Streifen (12) umfasst.

10. Kraftfahrzeug umfassend ein Schutzmodul nach einem der Ansprüche 1 bis 9.

## Claims

1. Protection module for a vehicle (30) intended to protect a pedestrian (40) in the event of an impact between the front end of the vehicle (30) and the pedestrian (40), the vehicle (30) comprising a bumper, the protection module comprising an inflatable structure which, in an inactive position, intended to be integrated into the front end of the vehicle (30) or into the rear end (31) of the vehicle (30) bonnet at the angle it forms with the windscreen and which, in the protective position, intended to be deployed outwards from the front end or from the rear end (31) of the bonnet at the angle it forms with the windscreen, the protection module further comprising a gas-generating device for inflating the inflatable structure, **characterized in that** the inflatable structure comprises a first impact section (10) intended to be arranged on the bumper of the vehicle (30) and a second impact section (20a, 20b) intended to be arranged on the bonnet (31) of the vehicle (30), **characterized in that** each impact section (10, 20a, 20b) comprising a retaining means (11,21a, 22b, 23b, 25a) intended to surround in the protective position at least half the circumference of the pedestrian's body (40).

2. Module according to claim 1, **characterized in that** the second impact section (20b) comprises a mattress (21b).

3. Module according to claim 1, **characterized in that** the second impact section (20a) comprises a frame in the form of a right prism presenting a vertical front end (21a) and a substantially inclined rear end (22a) comprising an opening and two lateral ends (23a) each comprising an opening, the said frame being intended to be deployed outwards onto the bonnet (31).

4. Module according to claim 3, **characterized in that** said frame comprises a set of vertical arms (25a) forming the retaining means.

5. Module according to any one of claims 1 to 2, **characterized in that** the retaining means comprises two arms (13, 14, 22b, 23b) which can be joined together to form an arc of a circle.

6. Module according to any one of claims 1 to 2, **characterized in that** the retaining means comprises a parabolic or semicircular horizontal tube (11).

7. Module according to any one of claims 5 to 6, **characterized in that** the retaining means comprises extensions (15) intended to be held together in the event of an impact between the pedestrian (40) and the automotive vehicle (30) by using a holding device.

8. Module according to claim 7, **characterized in that** the holding device is an adhesive, glue or quick-coupling device comprising two textile strips each coated with a different texture.

9. Module according to any one of claims 5 to 8, **characterized in that** said retaining means comprises a strip (12).

10. Automotive vehicle comprising a protection module according to any one of claims 1 to 9.
